# EUROPEAN PATENT APPLICATION

(11) **EP 2 330 489 A1**
(43) Date of publication of application: **08.06.2011**
(21) Application number: 09814384.5
(22) Date of filing: 09.07.2009
(51) Int. Cl.: G06F 3/041, G02F 1/133, G06T 1/00, G09F 9/30, H04N 1/028

(54) **DISPLAY PANEL WITH BUILT-IN OPTICAL SENSOR**

(30) Priority: 19.09.2008 JP 2008241578
(71) Applicant: Sharp Kabushiki Kaisha, Osaka-shi, Osaka 545-8522 (JP)
(72) Inventor: FUJIOKA, Akizumi, Osaka-shi, Osaka 545-8522 (JP); NAKAYAMA, Takahiro, Osaka-shi, Osaka 545-8522 (JP); UEHATA, Masaki, Osaka-shi, Osaka 545-8522 (JP); GOTOH, Toshimitsu, Osaka-shi, Osaka 545-8522 (JP)
(74) Representative: Goddar, Heinz J.
(86) International application number: PCT/JP2009/062507
(87) International publication number: WO 2010/032539

(57) **Abstract**

A display panel housing optical sensors has an active matrix substrate (100) having a pixel region (1) in which pixels are arranged in a matrix, and optical sensors (11) are formed in at least a portion of the pixel region (1). Included among the optical sensors (11) in the pixel region (1) are an image pick-up sensor (11a) that picks up an image of an object that has come close to the pixel region (1) and an environmental illuminance sensor (11b) that detects environmental illuminance, as optical sensors having mutually different characteristics. A signal processing circuit (8) performs processing on an output signal from the image pick-up sensor (11a) in accordance with the environmental illuminance detected by the environmental illuminance sensor (11b).

## Description

### Technical Field

The present invention relates to a display panel housing optical sensors that has photodetection elements such as photodiodes inside pixels and that can be utilized as a scanner or touch panel, and a display device using the same.

### Background Art

Conventionally, a display device with an image pick-up function has been proposed that, due to including photodetection elements such as photodiodes inside the pixel region, can pick up an image of an object that has come close to the display (e.g., see PTL 1). The photodetection elements inside the pixel region are formed on an active matrix substrate at the same time as the formation of known constituent elements such as signal lines, scan lines, TFTs (Thin Film Transistors), and pixel electrodes using a known semiconductor process. Such a display device with an image pick-up function is envisioned to be used as a bidirectional communication display device or a display device with a touch panel function.

Also, conventionally there is known to be a photodetection element (e.g., see PTL 2) that is attached to the casing of a liquid crystal display device as a discrete part, in order to detect the brightness of ambient light (environmental illuminance). The environmental illuminance detected by such a photodetection element is used in the control of the luminance of a backlight device or the like.

### Citation List

### Patent Literature

PTL 1: JP 2007-81870A
PTL 2: JP H06-11713A

### Disclosure of Invention

In a display panel housing optical sensors such as that disclosed in PTL 1, the result of the detection performed by the photodetection elements provided inside the pixel region is processed in a computation processing circuit as a two-dimensional captured image signal. Here, in the case where there is a desire to perform different processing or the like in the computation processing circuit depending on the magnitude of the environmental illuminance, it is necessary to detect the environmental illuminance with use of elements that are separate from the photodetection elements inside the pixel region. In such a case, a configuration is conceivable in which a photodetection element that is a discrete part such as that disclosed in PTL 2 is attached outside the pixel region (on the surface of the liquid crystal panel) as an environmental illuminance sensor.

However, in the case of such a configuration, light that is incident on the photodetection elements provided inside the pixel region passes through some of the constituent elements of the liquid crystal panel (e.g., a polarizing plate or a glass substrate) before reaching these photodetection elements. Light that has passed through some of the constituent elements of the liquid crystal panel in this way has different spectral characteristics from those of the light before it passed through. Accordingly, in a display panel housing optical sensors such as that disclosed in PTL 1, with a configuration in which a photodetection element for detecting environmental illuminance is attached outside the pixel region (on the surface of the liquid crystal panel) as described above, light that has been incident on the photodetection elements inside the pixel region has different spectral characteristics from light that has been incident on the photodetection element for detecting environmental illuminance. For this reason, this configuration has the problem that performing precise control in accordance with the environmental illuminance is difficult.

In light of the above-described problem, an object of the present invention is to provide a display panel housing optical sensors that can perform control with high precision in accordance with environmental illuminance or the like, and a display device using the same.

In order to achieve the above-described object, a display panel housing optical sensors according to the present invention is a display panel housing optical sensors that has an active matrix substrate having a pixel region in which pixels are arranged in a matrix, optical sensors being formed in at least a portion of the pixel region, the display panel housing optical sensors including: optical sensors having mutually different sensitivity characteristics inside the pixel region; and, furthermore, a signal processing circuit that performs processing in accordance with respective output signals from the optical sensors. Note that the signal processing circuit may be disposed inside the panel (on the active matrix substrate), or outside the panel.

The present invention enables providing a display panel housing optical sensors that can perform control with high precision in accordance with environmental illuminance or the like, and a display device using the same.

### Brief Description of Drawings

FIG. 1 is a block diagram showing a schematic configuration of an active matrix substrate that is included in a display panel housing optical sensors according to an embodiment of the present invention.
FIG. 2 is an illustrative plan view showing an example of the arrangement and distribution of image pick-up sensors and environmental illuminance sensors in a pixel region according to Embodiment 1.
FIG. 3 is a cross-sectional diagram showing a cross-sectional configuration corresponding to a unit pixel in a display panel housing optical sensors according to Embodiment 1.
FIG. 4 is a graph showing characteristics of an image pick-up sensor and an environmental illuminance sensor.
FIG. 5 is an equivalent circuit diagram of the image pick-up sensor and the environmental illuminance sensor.
FIG. 6 is a block diagram showing an example of an internal configuration of a signal processing circuit.
FIG. 7A is an image of a finger in the case where the ambient environment is bright.
FIG. 7B is an image of a finger in the case where the ambient environment is somewhat dark.
FIG. 7C is an image of a finger in the case where the ambient environment is dark.
FIGS. 8A and 8B are illustrative cross-sectional diagrams showing a shadow image mode and a reflection mode of the display panel housing optical sensors.
FIG. 9 is an illustrative diagram showing the correlation between the position of a finger and sensor output from image pick-up sensors in the case where a finger has come into contact with the panel face, where (a) shows the case where the ambient environment is sufficiently bright, (b) shows the case where the ambient environment is somewhat dark, and (c) shows the case where the ambient environment is dark.
FIG. 10 is an illustrative plan view showing an example of the arrangement and distribution of image pick-up sensors and environmental illuminance sensors in a pixel region according to Embodiment 2.
FIG. 11 is a cross-sectional diagram showing a cross-sectional configuration corresponding to a unit pixel in a display panel housing optical sensors according to Embodiment 2.
FIG. 12 is a cross-sectional diagram showing a cross-sectional configuration corresponding to a unit pixel in a display panel housing optical sensors according to a variation of Embodiment 2.

### Description of the Invention

In order to achieve the above-described object, a display panel housing optical sensors according to an embodiment of the present invention is display panel housing optical sensors that has an active matrix substrate having a pixel region in which pixels are arranged in a matrix, optical sensors being formed in at least a portion of the pixel region, the display panel housing optical sensors including: optical sensors having mutually different sensitivity characteristics inside the pixel region; and, furthermore, a signal processing circuit that performs processing in accordance with respective output signals from the optical sensors. Note that the signal processing circuit may be disposed inside the panel (on the active matrix substrate), or outside the panel. According to the above-described configuration, the signal processing circuit performs processing in accordance with the output signals from the optical sensors that have mutually different sensitivity characteristics, thus enabling performing appropriate processing in accordance with environmental illuminance or the like.

In the above-described display panel housing optical sensors, it is preferable that included among the optical sensors are an image pick-up sensor that picks up an image of an object that has come close to the pixel region and an environmental illuminance sensor that detects environmental illuminance, and the signal processing circuit performs processing on an output signal from the image pick-up sensor in accordance with the environmental illuminance detected by the environmental illuminance sensor. According to this configuration, the environmental illuminance sensor is provided inside the pixel region likewise to the image pick-up sensor, thus enabling providing a display panel housing optical sensors in which, in comparison to the case of using an external sensor as the environmental illuminance sensor, the conditions of light that is incident on the environmental illuminance sensor and light that is incident on the image pick-up sensor can be made substantially the same, and control can be performed with high precision in accordance with environmental illuminance.

The above-described display panel housing optical sensors preferably has a configuration in which the optical sensors each include a photodiode formed on the active matrix substrate, a capacitor connected to the photodiode, and a switching element that controls readout of charge accumulated in the capacitor, the photodiode in the image pick-up sensor and the photodiode in the environmental illuminance sensor have substantially the same characteristics, and capacitances of the capacitors are mutually different in the optical sensors having mutually different sensitivity characteristics. Causing the capacitors that accumulate a charge in accordance with photocurrent from the photodiodes to have different capacitances in this way enables forming optical sensors that have mutually different characteristics inside the pixel region.

The above-described display panel housing optical sensors may have a configuration in which the optical sensors each include a photodiode formed on the active matrix substrate, a capacitor connected to the photodiode, and a switching element that controls readout of charge accumulated in the capacitor, the photodiode in the image pick-up sensor and the photodiode in the environmental illuminance sensor have substantially the same characteristics, and the display panel housing optical sensors further includes a light amount restriction member that restricts the amount of light that is incident on the environmental illuminance sensor, on a path of light that is incident on the environmental illuminance sensor. Providing the light amount restriction member that restricts the amount of light that is incident on the environmental illuminance sensor in this way also enables forming optical sensors that have mutually different characteristics inside the pixel region.

Note that the light amount restriction member may be a light-shielding film or a color filter that covers a portion of a pixel in which the environmental illuminance sensor is provided, or a neutral density film that covers the entirety of a pixel in which the environmental illuminance sensor is provided.

The environmental illuminance sensor may be provided in a dummy pixel region that does not contribute to display in the pixel region, or may be provided in an effective pixel region that contributes to display in the pixel region. In the latter case, it is preferable that the light amount restriction member is not provided. This prevents degradation in display quality in the effective pixel region.

Below is a description of more specific embodiments of the present invention with reference to the drawings. Note that although an exemplary configuration in the case in which a display device according to the present invention is implemented as a liquid crystal display device is described in the following embodiments, the display device according to the present invention is not limited to a liquid crystal display device, and the present invention is applicable to an arbitrary display device that uses an active matrix substrate. Note that due to having an image pick-up function, the display device according to the present invention is envisioned to be used as, for example, a display device with a touch panel that performs input operations by detecting an object near the screen, a scanner that reads an image of a document or the like that has been placed on the screen, or a bidirectional communication display device that is equipped with a display function and an imaging function.

Also, for the sake of convenience in the description, the drawings referenced below show simplifications of, among the constituent members of the embodiments of the present invention, only main members that are necessary for describing the present invention. Accordingly, the display device according to the present invention can include arbitrary constituent members that are not shown in the drawings referenced in this description. Also, regarding the dimensions of the members in the drawings, the dimensions of the actual constituent members, the ratios of the dimensions of the members, and the like are not shown faithfully.

### Embodiment 1

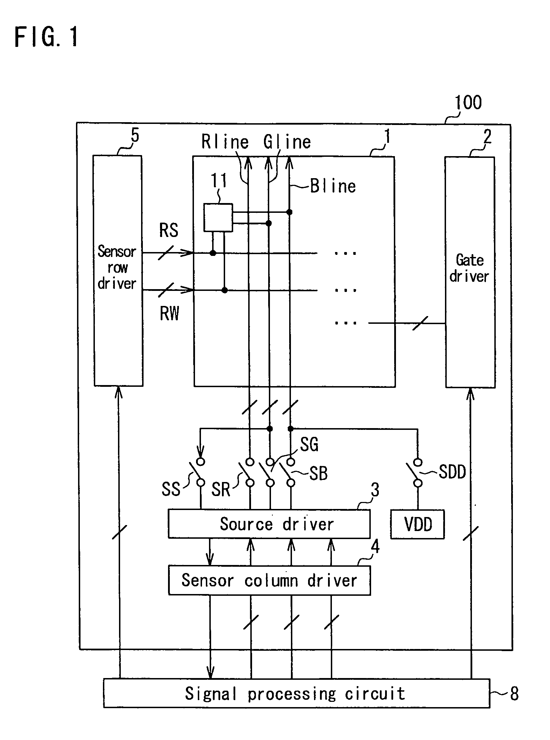

FIG. 1 is a block diagram showing a schematic configuration of an active matrix substrate 100 that is included in a display panel housing optical sensors according to the present embodiment. As shown in FIG. 1, the active matrix substrate 100 includes, on a glass substrate (not shown), at least a pixel region 1 in which pixels are arranged in a matrix, a gate driver 2, a source driver 3, a sensor column driver 4, and a sensor row driver 5. Also, a signal processing circuit 8 for generating a signal for driving the pixels in the pixel region 1 and for processing sensor output from optical sensors 11 in the pixel region 1 is connected to the active matrix substrate 100 via an FPC connector and an FPC (neither of which is shown).

The above-described constituent members on the active matrix substrate 100 can also be formed monolithically on the glass substrate by a semiconductor process. Alternatively, a configuration is possible in which amplifiers and various types of drivers among the above-described constituent elements are mounted on the glass substrate by COG (Chip On Glass) technology or the like. As another alternative, a configuration is possible in which at least some of the above-described constituent members shown on the active matrix substrate 100 in FIG. 1 are mounted on the FPC.

The pixel region 1 is a region where a plurality of pixels are arranged in a matrix. In the present embodiment, one optical sensor 11 is provided in each of the pixels in the pixel region 1. It should be noted that there are two types of optical sensors 11 provided in the pixel region 1, namely an image pick-up sensor that picks up an image of an object that has come close, and an environmental illuminance sensor that detects the environmental illuminance.

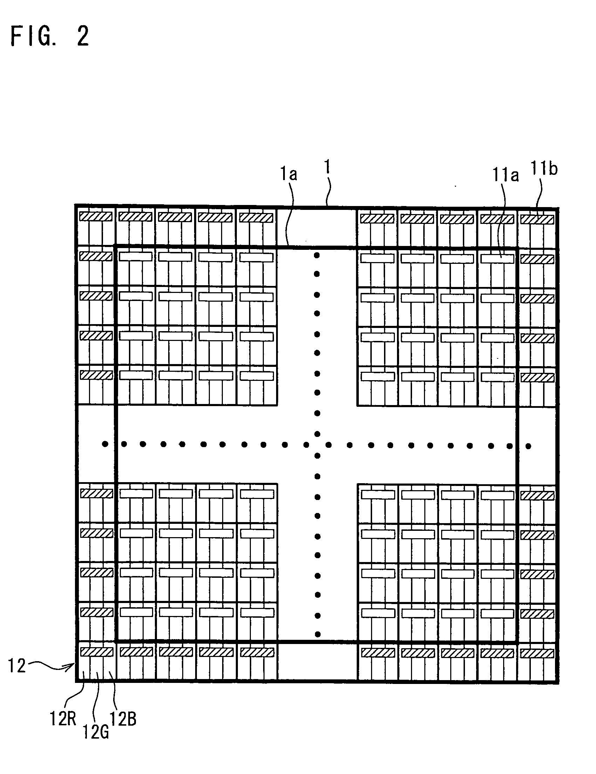

FIG. 2 is an illustrative plan view showing an example of the arrangement and distribution of image pick-up sensors and environmental illuminance sensors in the pixel region 1. In FIG. 2, each rectangle represents one pixel composed of three picture elements. Also, in FIG. 2, image pick-up sensors 11a are illustratively represented by small empty rectangles within the rectangles representing the pixels, and environmental illuminance sensors 11b are illustratively represented by small hatched rectangles within the rectangles representing the pixels.

In the example shown in FIG. 2, the environmental illuminance sensor 11b are provided the most outward in the pixel region 1, along the four sides of the pixel region 1, and the image pick-up sensors 11a are provided inward of the environmental illuminance sensors 11b. Note that the pixels provided with the environmental illuminance sensors 11b also receive the application of an image signal as effective pixels, and contribute to image display. Specifically, in the example shown in FIG. 2, the entirety of the pixel region 1 displays an image as an effective pixel region, and a region 1a in which the image pick-up sensors 11a are provided functions as an image pick-up region.

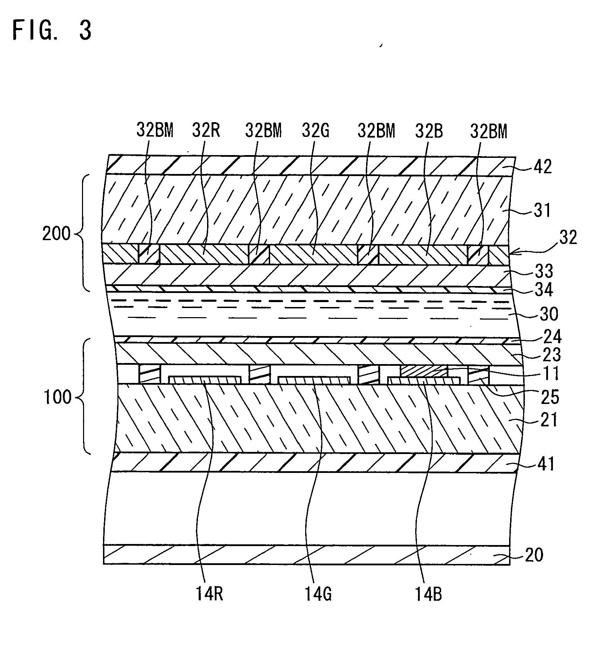

In the example shown in FIG. 2, each pixel 12 is formed by three picture elements, namely a red picture element 12R, a green picture element 12G, and a blue picture element 12B. Note that although the optical sensor 11 of each pixel 12 is shown in FIG. 2 as being formed across the entirety of the three picture elements 12R, 12G, and 12B, FIG. 2 is not intended to show the actual physical disposition positions of the optical sensors 11. In actuality, the optical sensors 11 are formed in any one of the picture element regions as shown in FIG. 3 which is described next.

FIG. 3 is a cross-sectional diagram showing a cross-sectional configuration corresponding to a unit pixel in the display panel housing optical sensors according to the present embodiment. Note that in the present embodiment, the schematic cross-sectional configuration of each pixel is substantially the same regardless of whether the optical sensor 11 is an image pick-up sensor 11a or an environmental illuminance sensor 11b. Accordingly, the configuration of the pixels is hereinafter described without distinguishing between pixels in which an image pick-up sensor 11a is disposed and pixels in which an environmental illuminance sensor 11b is disposed, with reference to a diagram (FIG. 3) that applies to both.

As shown in FIG. 3, the display panel housing optical sensors according to the present embodiment has a configuration in which a liquid crystal module, in which a liquid crystal layer 30 is sandwiched between the active matrix substrate 100 and a common substrate 200, is disposed between a pair of polarizing plates 41 and 42. Also, a backlight 20 is provided outward of the active matrix substrate 100.

The active matrix substrate 100 includes source wiring 25, pixel electrodes 14R, 14G, and 14B, the optical sensors 11, an interlayer insulating film 23, an alignment film 24, and the like, on a glass substrate 21. Note that although they do not appear in FIG. 3, the active matrix substrate 100 also includes known configurations such as gate wiring and TFTs.

The common substrate 200 includes a color filter layer 32, a common electrode 33, an alignment film 34, and the like, on a glass substrate 31. The color filter layer 32 has a red filter 32R, a green filter 32G, a blue filter 32B, and a black matrix 32BM.

Specifically, in the pixel 12, a red picture element display signal is applied from the source wiring 25 to the pixel electrode 14R corresponding to the red filter 32R. Also, a green picture element display signal and a blue picture element display signal are respectively applied to the pixel electrodes 14G and 14B corresponding to the green filter 32G and the blue filter 32B. This realizes RGB color display.

In the example shown in FIG. 3, the optical sensor 11 is formed in the blue picture element. However, the optical sensor 11 may be formed in the green picture element, or in the red picture element. Note that although the configuration of the optical sensor 11 is not shown in detail in FIG. 3, a light-shielding layer is provided below the optical sensor 11 in order to prevent light from the backlight 20 from being incident thereon.

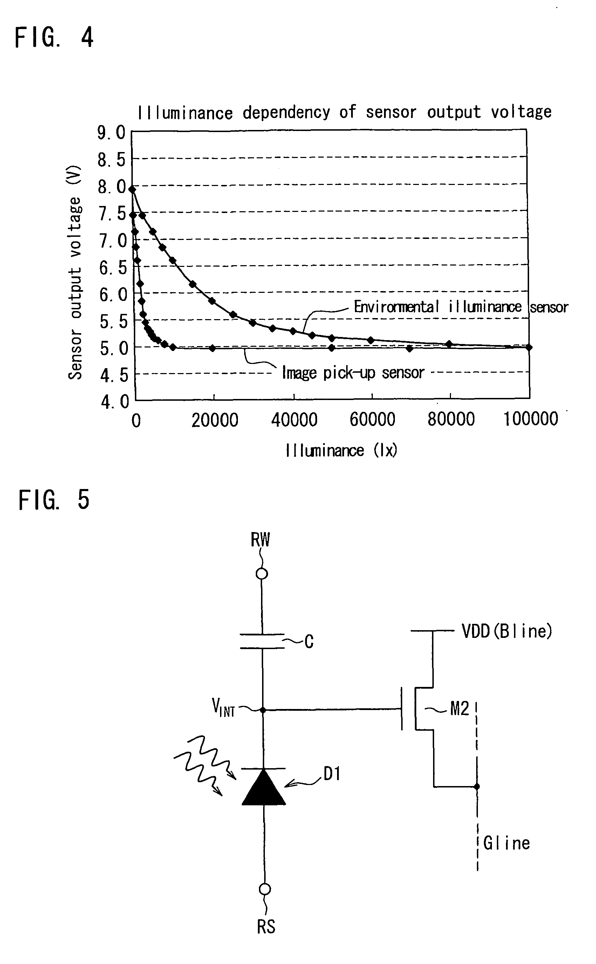

FIG. 4 is a graph showing characteristics of the image pick-up sensors 11a and the environmental illuminance sensors 11b. As shown in FIG. 4, the image pick-up sensors 11a and the environmental illuminance sensors 11b have mutually different characteristics with respect to incident light. Specifically, with the image pick-up sensors 11a, the sensor output voltage changes steeply between 0 and approximately 10,000 lx. In other words, although they are saturated at a relatively low illuminance, the image pick-up sensors 11a can detect changes in brightness between 0 and approximately 10,000 lx with favorable sensitivity On the other hand, with the environmental illuminance sensors 11b, the sensor output voltage changes gently between 0 and approximately 100,000 lx. In other words, although not highly sensitive, the environmental illuminance sensors 11b can detect illuminance without being saturated up to approximately 100,000 lx.

FIG. 5 is an equivalent circuit diagram of the image pick-up sensors 11a and the environmental illuminance sensors 11b. Specifically, the structure of the optical sensors 11 is common to the image pick-up sensors 11a and the environmental illuminance sensors 11b, and as shown in FIG. 5, each optical sensor 11 has a photodiode D1, a capacitor C, and a sensor preamplifier M2. The anode of the photodiode D1 is connected to the sensor row driver 5 (see FIG. 1) via reset wiring RS. The cathode of the photodiode D1 is connected to one of the electrodes of the capacitor C. The other electrode of the capacitor C is connected to the sensor row driver 5 via readout signal wiring RW. Note that the number of pairs of reset wiring RS and readout signal wiring RW is equivalent to the number of pixels in the row direction in the pixel region 1.

Note that in the present embodiment, the capacitor C of the image pick-up sensor 11a is formed so as to have a smaller capacitance than the capacitor C of the environmental illuminance sensor 11b. The image pick-up sensors 11a thus have steeper characteristics with respect to the amount of incident light than the environmental illuminance sensors 11b.

As shown in FIGS. 1 and 5, the cathode of the photodiode D1 is connected to the gate of the sensor preamplifier M2. The source of the sensor preamplifier M2 is connected to a source line Bline for driving the blue picture element (described later). The drain of the sensor preamplifier M2 is connected to a source line Gline for driving the green picture element (described later). In a writing period for the picture elements, switches SR, SG, and SB that carry output from the source driver 3 to a source line Rline for driving the red picture element (described later) and the source lines Gline and Bline are turned on, and a switch SS and a switch SDD are turned off. Accordingly, a video signal from the source driver 3 is written to the picture elements. On the other hand, in a predetermined period (sensing period) between writing periods, the switches SR, SG, and SB are turned off, and the switch SS and the switch SDD are turned on. The switch SS connects the drain of the sensor preamplifier M2 and the source line Gline to the sensor column driver 4. The switch SDD connects a constant voltage source VDD to the Bline. Note that although an example of a configuration in which the source lines Gline and Bline also play the role of driving wiring for the sensor preamplifier M2 is shown in FIGS. 1 and 5, which source lines are used as the driving wiring for the sensor preamplifier M2 is arbitrary design matter. Also, instead of the source lines also playing the role of driving wiring for the sensor preamplifier M2, a configuration is possible in which driving wiring for the sensor preamplifier M2 is provided separately from the source lines.

In the optical sensor 11, the sensing period is started due to the supply of a reset signal from the reset wiring RS. After the start of sensing, the potential V_{INT} of the cathode of the photodiode D1 decreases according to the amount of received light. Thereafter, due to the supply of a readout signal from the readout signal wiring RW, the potential V_{INT} of the cathode of the photodiode D1 at that time is read out, and is then amplified by the sensor preamplifier M2.

The output (sensor output) from the sensor preamplifier M2 is sent to the sensor column driver 4 via the signal wiring Gline. The sensor column driver 4 further amplifies the sensor output, and outputs the resulting sensor output to the signal processing circuit 8.

Note that the sensor output from the image pick-up sensors 11a and the sensor output from the environmental illuminance sensors 11b are treated separately in the signal processing circuit 8. Specifically, the signal processing circuit 8 detects the environmental illuminance based on the sensor output from the environmental illuminance sensors 11b. The signal processing performed on the sensor output from the image pick-up sensors 11a is then changed in accordance with the magnitude of the detected environmental illuminance. For example, in the case where the display panel housing optical sensors according to the present embodiment is a touch panel, it is preferable to perform different signal processing performed on an image picked up by the image pick-up sensors 11a as an image of a finger that has touched the panel face when the ambient environment is bright and when it is dark.

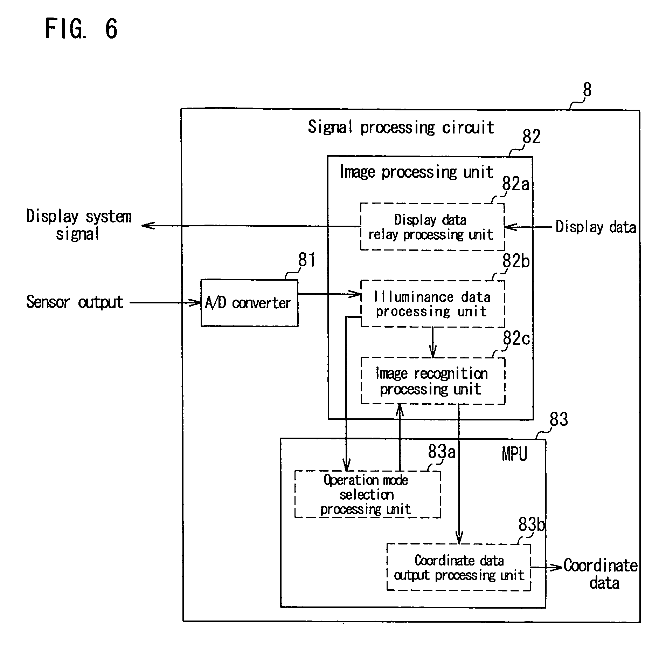

Below is a description of an example of a configuration of the signal processing circuit 8 with reference to FIG. 6. FIG. 6 is a block diagram showing an example of an internal configuration of the signal processing circuit 8. In the example shown in FIG. 6, the signal processing circuit 8 includes an A/D converter 81, an image processing unit 82, and an MPU 83. The A/D converter 81 converts sensor output (analog signal) from the sensor column driver 4 (see FIG. 1) into a digital signal. The image processing unit 82 includes a display data relay processing unit 82a, an illuminance data processing unit 82b, and an image recognition processing unit 82c. The display data relay processing unit 82a receives an input of display data for an image to be displayed in the pixel region 1, generates display system signals such as RGB signals and various types of timing signals, and outputs the generated signals to the source driver 3 and the like. Note that this display data is supplied from an external host device. For each pixel, the illuminance data processing unit 82b generates illuminance data obtained from the optical sensor 11, based on a digital sensor output signal received as input from the A/D converter 81. Here, the illuminance data obtained from the sensor output from the image pick-up sensors 11a is sent to the image recognition processing unit 82c. On the other hand, illuminance data obtained from the sensor output from the environmental illuminance sensors 11b is sent to an operation mode selection processing unit 83a.

The operation mode selection processing unit 83a detects the magnitude of the environmental illuminance based on the illuminance data obtained from the sensor output from the environmental illuminance sensors 11b. The operation mode selection processing unit 83a then determines the processing mode of the image recognition processing unit 82c in accordance with the detected magnitude of the environmental illuminance. The determined processing mode is sent to the image recognition processing unit 82c as an instruction with use of mode signals that differ for each processing mode. In accordance with the processing mode instructed by the operation mode selection processing unit 83a, the image recognition processing unit 82c processes the illuminance data obtained from the sensor output from the image pick-up sensors 11a.

The result of the processing performed by the image recognition processing unit 82c is, for example, sent to a coordinate data output processing unit 83b, and then output as coordinate data. For example, considering the image picked up by the image pick-up sensors 11a to be a collection of points at a predetermined resolution, this coordinate data indicates the luminance at the coordinates of each point.

Below is a description of the example in which, in the display panel housing optical sensors according to the present embodiment, the processing mode of the image recognition processing unit 82c is switched in accordance with the magnitude of the environmental illuminance detected by the environmental illuminance sensors 11b.

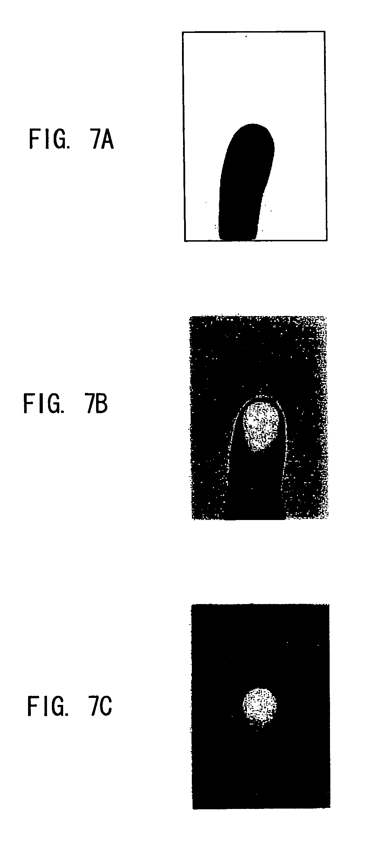

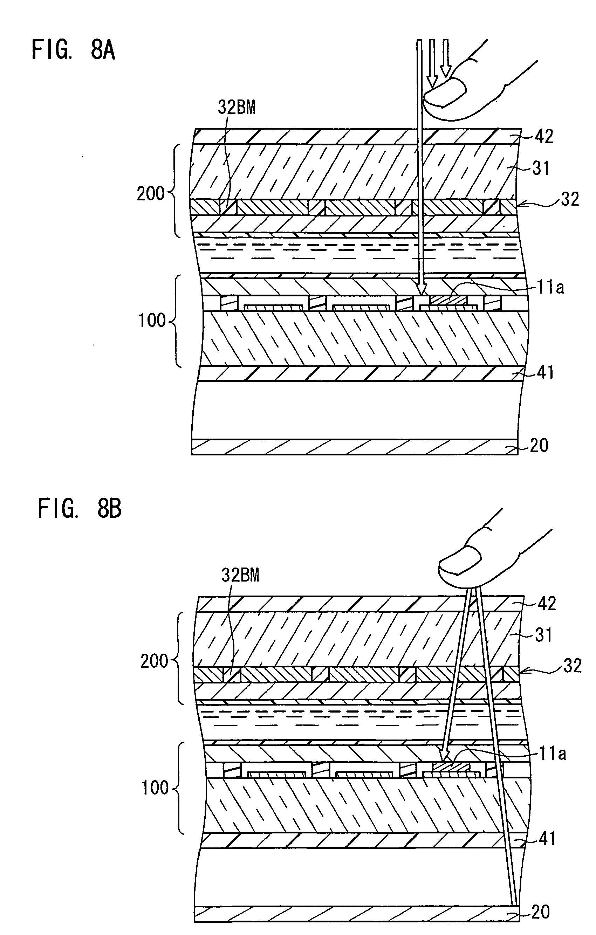

When an object such as a person's finger has come close to the display panel face, the condition of the image of the finger detected by the image pick-up sensors 11a differs depending on the magnitude of the environmental illuminance (the brightness of the ambient environment). FIG. 7A is an image of a finger in the case where the ambient environment is bright, FIG. 7B is an image of a finger in the case where the ambient environment is somewhat dark, and FIG. 7C is an image of a finger in the case where the ambient environment is dark. As shown in FIG. 8A, in the case where the ambient environment is bright, the entrance of external light is blocked only in the region where the finger is present, and therefore a dark shadow (shadow image) appears only in the region where the finger is present, and the area surrounding the shadow image is bright. In the case where the ambient environment is somewhat dark as shown in FIG. 7B, light from the backlight 20 that has been reflected off the pad portion of the finger is incident on the image pick-up sensors 11a (see FIG. 8B), and thus the pad portion of the finger appears white. Also, at the same time, the outline portion of the image of the finger is perceived as being darker than the surrounding portion due to contrast with external light. On the other hand, in the case where the ambient environment is dark as shown in FIG. 7C, only the light from the backlight 20 that has been reflected off the pad portion of the finger is detected by the image pick-up sensors 11a.

In this way, whether a shadow image or a reflected image is to be detected is determined by the signal processing method performed in the signal processing circuit 8. Accordingly, a configuration is preferable in which the signal processing performed in the signal processing circuit 8 is switched between a shadow image detection mode and a reflected image detection mode.

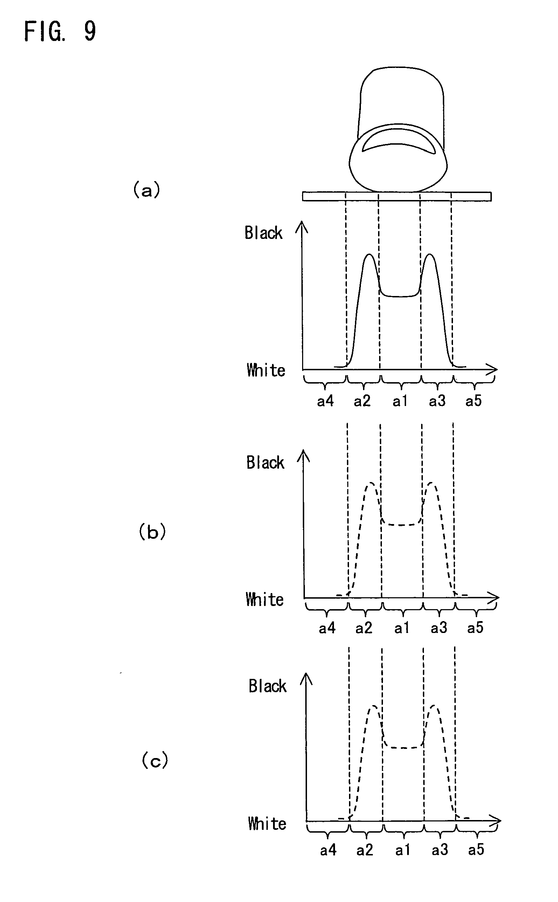

FIG. 9 is an illustrative diagram showing the correlation between the position of a finger and sensor output from the image pick-up sensors 11a in the case where the finger has come into contact with the panel face, where sensor output from the image pick-up sensors 11a is shown: (a) in the case where the ambient environment is sufficiently bright, (b) in the case where the ambient environment is somewhat dark, and (c) in the case where the ambient environment is dark.

As shown in (a) of FIG. 9, in the case where the ambient environment is sufficiently bright, light from the backlight 20 is reflected off the pad of the finger in a region a1 where the pad of the finger is in close contact with the panel face, and this reflected light is detected by the image pick-up sensors 11a. Accordingly, the signal level of the sensor output from the image pick-up sensors 11a in this region a1 is a level relatively close to white. Also, in regions a2 and a3 that are in the vicinity of the region a1, light from the backlight 20 that has been reflected off and dispersed by the pad of the finger and ambient environmental light that is diagonally incident are somewhat incident on the image pick-up sensors 11a, whereas ambient environmental light from the vertical direction is blocked by the finger. For this reason, the level of the output from the image pick-up sensors 11a in these regions a2 and a3 is closer to the black level than the output in the region a1. Meanwhile, in regions a4 and a5 that are outward of the width of the finger, ambient environmental light is incident on the image pick-up sensors 11a, and therefore the output from the image pick-up sensors 11a in these regions a4 and a5 is closer to the white level.

In contrast, as shown in (b) of FIG. 9, in the case where the ambient environment is somewhat dark, the output from the image pick-up sensors 11a in the regions a4 and a5 is closer to the black level than in the case shown in (a) of FIG. 9. For this reason, the level of the sensor output from reflection (region a1) is substantially equivalent to the level of the sensor output from ambient environmental light (regions a4 and a5), and there is the possibility of a recognition error occurring.

Also, as shown in (c) of FIG. 9, in the case where the ambient environment is dark, the output from the image pick-up sensors 11a in the regions a4 and a5 is further closer to the black level than in the case shown in (b) of FIG. 9.

As can be understood from a comparison of (a) to (c) in FIG. 9, the waveform of the output from the image pick-up sensors 11a at the boundary between the regions a2 and a4 and the boundary between the regions a3 and a5 is significantly different depending on the brightness of the ambient environment. Accordingly, in order to precisely detect the edges of the image of the finger (the boundary between the regions a2 and a4 and the boundary between the regions a3 and 5) from the output from the image pick-up sensors 11a, it is preferable to change the detection conditions such as a threshold value, by switching the operation mode of the image recognition processing unit 82c in accordance with the ambient environment brightness detected by the environmental illuminance sensors 11b.

Note that various modifications can be made to Embodiment 1 within the scope of the present invention. For example, although FIG. 2 shows an example of a configuration in which the environmental illuminance sensors 11b are provided the most outward along the four sides of the pixel region 1, a configuration is possible in which the environmental illuminance sensors 11b are furthermore provided inward as well. Alternatively, on the contrary, if the number of environmental illuminance sensors 11b needs not be large, a configuration is conceivable in which, for example, the environmental illuminance sensors 11b are provided at only the four corners of the pixel region 1.

As described above, in Embodiment 1, the environmental illuminance sensors 11b are provided inside pixels in the pixel region 1, likewise to the image pick-up sensors 11a. For this reason, the spectral characteristics of light that is incident on the image pick-up sensors 11a and light that is incident on the environmental illuminance sensors 11b is not readily different, in comparison to a conventional configuration in which an external sensor attached to the panel surface is used as the environmental illuminance sensor. This enables realizing a display panel housing optical sensors that can appropriately perform processing on sensor output in accordance with the environmental illuminance.

### Embodiment 2

Next is a description of Embodiment 2 of the present invention.

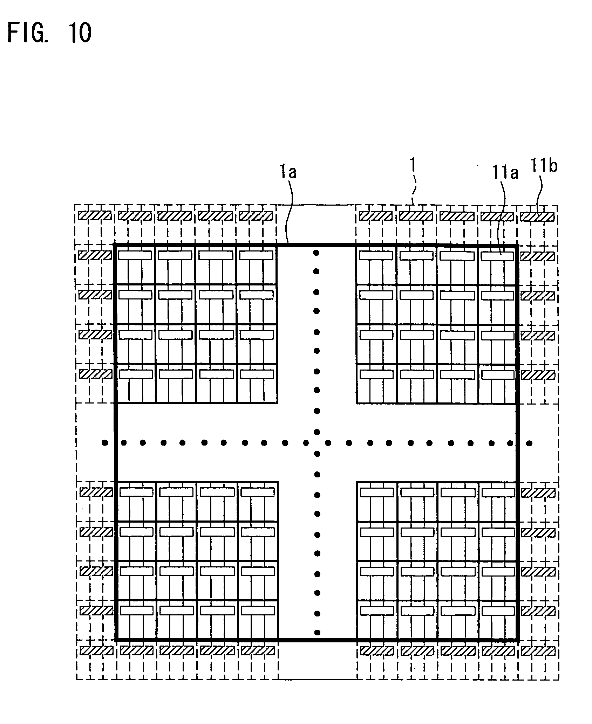

As shown in FIG. 10, a display panel housing optical sensors according to Embodiment 2 is provided with dummy pixels, which do not contribute to display, most outward along the four sides of the pixel region 1, and only the inward region 1a is the effective pixel region. Also, the image pick-up sensors 11a are provided in the region 1a, which is the effective pixel region, and the environmental illuminance sensors 11b are provided in the dummy pixel region.

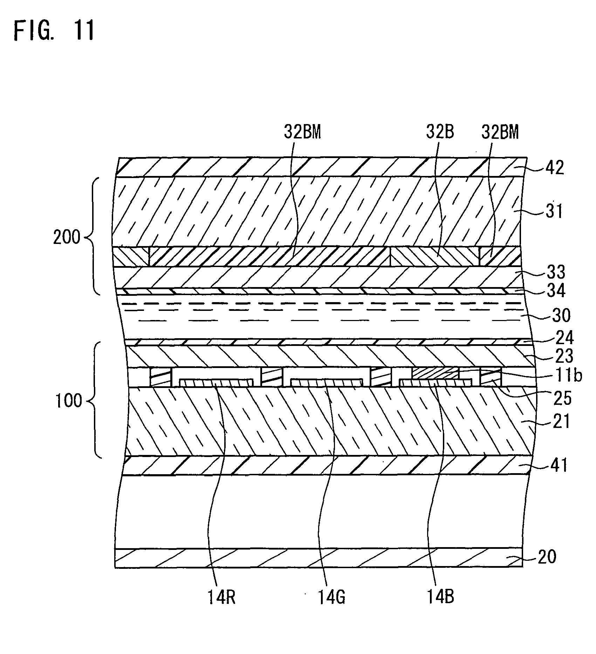

FIG. 11 is a cross-sectional diagram showing a configuration of a dummy pixel in which an environmental illuminance sensor 11b is formed, in the display panel housing optical sensors according to Embodiment 2. Note that the configuration of the pixels in which the image pick-up sensors 11a are provided is similar to that of Embodiment 1 shown in FIG. 3, and thus a description thereof has been omitted.

As shown in FIG. 11, in the dummy pixel in which the environmental illuminance sensor 11b is formed, the black matrix 32BM is provided above, among the three picture elements configuring each pixel, the two picture elements in which the environmental illuminance sensor 11b is not provided. A description of the other aspects has been omitted since they are similar to those of Embodiment 1 shown in FIG. 3. Note that although FIG. 11 shows the example in which the blue color filter 32B is provided above the environmental illuminance sensor 11b, the pixels in which the environmental illuminance sensors 11b are provided do not contribute to display, and therefore the color of the filter provided above the environmental illuminance sensors 11b is arbitrary.

Note that although the image pick-up sensors 11a and the environmental illuminance sensors 11b are caused to have difference characteristics in Embodiment 1 by causing the capacitors C (see FIG. 5) to have different capacitances, in Embodiment 2 the capacitances of the capacitors C in the image pick-up sensors 11a and the environmental illuminance sensors 11b can be substantially the same. Note that "substantially the same" as used herein is intended to allow for slight differences arising from, for example, variation in manufacturing conditions.

A feature of Embodiment 2 is that the aperture ratio of the environmental illuminance sensors 11b is reduced with use of the black matrix 32BM instead of by giving the sensors different circuit configurations as in Embodiment 1. Specifically, in Embodiment 2, the image pick-up sensors 11a and the environmental illuminance sensors 11b that have different characteristics as shown in FIG. 4 are realized by causing the amount of light that is incident on the environmental illuminance sensors 11b to be lower than the amount of light that is incident on the image pick-up sensors 11a. Note that similarly to Embodiment 1, according to Embodiment 2, the spectral characteristics of light that is incident on the image pick-up sensors 11a and light that is incident on the environmental illuminance sensors 11b is not readily different, in comparison to a conventional configuration in which an external sensor attached to the panel surface is used as the environmental illuminance sensor. This obtains the effect of enabling the realization of a display panel housing optical sensors that can appropriately perform processing on sensor output in accordance with the environmental illuminance, and furthermore, according to Embodiment 2, the process, masking pattern, and the like used when forming the optical sensors 11 may be used in common for both the image pick-up sensors 11a and the environmental illuminance sensors 11b, thus having the advantage that the manufacturing process is relatively easy

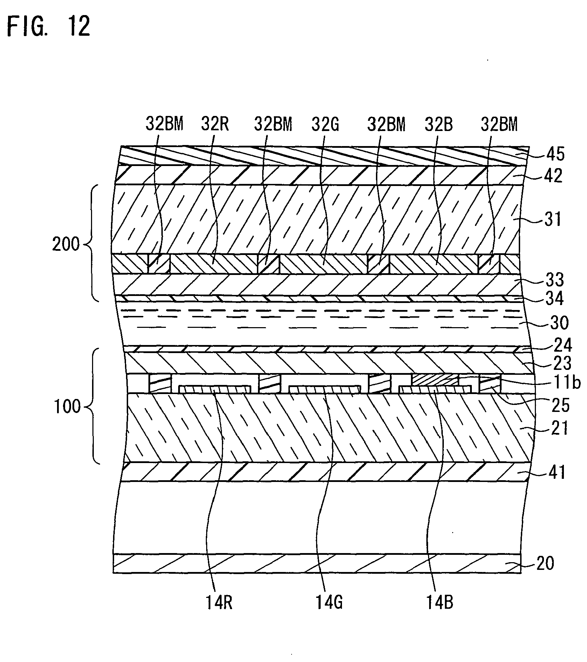

Note that FIG. 11 shows the example of a configuration in which the amount of light that is incident on the environmental illuminance sensors 11b is reduced with use of the black matrix 32BM. However, as a variation, a configuration in which the environmental illuminance sensors 11b are covered by a neutral density filter 45 as shown in FIG. 12 is also an embodiment of the present invention. Specifically, in the configuration shown in FIG. 12, although the pixels provided with the environmental illuminance sensors 11b have the three colors of color filters 32R, 32G, and 32B similarly to the pixels provided with the image pick-up sensors 11a, the amount of light that is incident on the environmental illuminance sensors 11b is reduced with use of the neutral density filter 45 formed over the polarizing plate 42. Similarly to the configuration shown in FIG. 11, this configuration also enables realizing the image pick-up sensors 11a and the environmental illuminance sensors 11b that have different characteristics as shown in FIG. 4.

Also, instead of using the black matrix of the common substrate, a configuration is possible in which the amount of light that is incident on the environmental illuminance sensors 11b is reduced by providing the active matrix substrate 100 with a reflective metal film or the like.

Although embodiments of the present invention have been described above, the present invention is not limited to only the above-described concrete examples, and various modifications can be made within the scope of the invention.

For example, in the above embodiments, examples of configurations have been given in which every pixel is provided with one optical sensor 11. However, an optical sensor does not necessarily need to be provided in every pixel. For example, a configuration is possible in which optical sensors are formed in every other row or every other column, and such a configuration is also included in the technical scope of the present invention.

### Industrial Applicability

The present invention is industrially applicable as a display panel housing optical sensors that has optical sensors, and a display device using the same.

### Reference Signs List

- 100: active matrix substrate
- 1: pixel region
- 2: gate driver
- 3: source driver
- 4: sensor column driver
- 5: sensor row driver
- 8: signal processing circuit
- 11: optical sensor
- 11a: image pick-up sensor
- 11b: environmental illuminance sensor
- 14: pixel electrode
- 21: glass substrate
- 23: interlayer insulating film
- 24: alignment film
- 25: source wiring
- 200: common substrate
- 31: glass substrate
- 32: color filter layer
- 32BM: black matrix
- 33: common electrode
- 34: alignment film
- 41: polarizing plate
- 42: polarizing plate
- 45: neutral density filter

## Claims

1. A display panel housing optical sensors that has an active matrix substrate having a pixel region in which pixels are arranged in a matrix, optical sensors being formed in at least a portion of the pixel region, the display panel housing optical sensors comprising:
optical sensors having mutually different sensitivity characteristics inside the pixel region; and, furthermore,
a signal processing circuit that performs processing in accordance with respective output signals from the optical sensors.

2. The display panel housing optical sensors according to claim 1,
wherein included among the optical sensors are an image pick-up sensor that picks up an image of an object that has come close to the pixel region and an environmental illuminance sensor that detects environmental illuminance, and
the signal processing circuit performs processing on an output signal from the image pick-up sensor in accordance with the environmental illuminance detected by the environmental illuminance sensor.

3. The display panel housing optical sensors according to claim 1,
wherein the optical sensors each include a photodiode formed on the active matrix substrate, a capacitor connected to the photodiode, and a switching element that controls readout of charge accumulated in the capacitor,
the photodiode in the image pick-up sensor and the photodiode in the environmental illuminance sensor have substantially the same characteristics, and
capacitances of the capacitors are mutually different in the optical sensors having mutually different sensitivity characteristics.

4. The display panel housing optical sensors according to claim 1,
wherein the optical sensors each include a photodiode formed on the active matrix substrate, a capacitor connected to the photodiode, and a switching element that controls readout of charge accumulated in the capacitor,
the photodiode in the image pick-up sensor and the photodiode in the environmental illuminance sensor have substantially the same characteristics, and
the display panel housing optical sensors further comprises a light amount restriction member that restricts the amount of light that is incident on the environmental illuminance sensor, on a path of light that is incident on the environmental illuminance sensor.

5. The display panel housing optical sensors according to claim 4, wherein the light amount restriction member is a light-shielding film that covers a portion of a pixel in which the environmental illuminance sensor is provided.

6. The display panel housing optical sensors according to claim 4, wherein the light amount restriction member is a color filter that covers a portion of a pixel in which the environmental illuminance sensor is provided.

7. The display panel housing optical sensors according to claim 4, wherein the light amount restriction member is a neutral density film that covers the entirety of a pixel in which the environmental illuminance sensor is provided.

8. The display panel housing optical sensors according to any one of claims 1 to 7, wherein the environmental illuminance sensor is provided in a dummy pixel region that does not contribute to display in the pixel region.

9. The display panel housing optical sensors according to claim 7, wherein the environmental illuminance sensor is provided in an effective pixel region that contributes to display in the pixel region.
